# EUROPEAN PATENT SPECIFICATION

(11) **EP 1 167 606 B1**
(45) Date of publication and mention of the grant of the patent: **04.01.2006**
(21) Application number: 00904077.5
(22) Date of filing: 21.02.2000
(51) Int. Cl.: D04H 1/72, D04H 1/42, D06N 3/14

(54) **NON-WOVEN FABRIC FROM POLYURETHANE ELASTOMER FIBER AND METHOD FOR PRODUCING THE SAME, AND SYNTHETIC LEATHER USING THE NON-WOVEN FABRIC FROM POLYURETHANE ELASTOMER FIBER**
FASERVLIES AUS POLYURETHAN-ELASTOMERFASERN HERSTELLUNGSVERFAHREN UND FASERVLIES ENTHALTENDES KUNSTLEDER
NON-TISSE PRODUIT A PARTIR DE FIBRES ELASTOMERES DE POLYURETHANNE, SON PROCEDE DE PRODUCTION ET CUIR SYNTHETIQUE COMPRENANT LE NON-TISSE PRODUIT A PARTIR DE FIBRES ELASTOMERES DE POLYURETHANNE

(30) Priority: 24.02.1999 JP 4608399
(43) Date of publication of application: 02.01.2002
(73) Proprietor: Kanebo Limited, Sumida-ku, Tokyo 131-0031 (JP); Kanebo Gohsen, Ltd., Osaka-shi, Osaka 530-0001 (JP)
(72) Inventor: YAMAKAWA, Yukio, Hofu-shi, Yamaguchi 747-0011 (JP); FURUYA, Tadashi, Hofu-shi, Yamaguchi 747-0834 (JP); KAWABATA, Eiji, Hofu-shi, Yamaguchi 747-0823 (JP); TANAKA, Yutaka, Osaka-shi, Osaka 534-0016 (JP)
(74) Representative: Müller-Boré & Partner Patentanwälte
(86) International application number: PCT/JP2000/000983
(87) International publication number: WO 2000/050680

(56) References cited:
- EP-A- 0 548 364
- EP-A- 0 761 869
- JP-A- 6 293 117
- JP-A- 7 157 957
- JP-A- 9 188 951
- US-A- 5 167 899

## Description

The present invention relates to a polyurethane elastic fiber nonwoven fabric wherein polyurethane elastic fiber filaments are mutually fused and bonded and its production, and a synthetic leather using the polyurethane elastic fiber nonwoven fabric and, more particularly, to a polyurethane elastic fiber nonwoven fabric having excellent stretchability and high tear strength and its production, and a synthetic leather using the polyurethane elastic fiber nonwoven fabric.

Among polyurethane elastic fiber nonwoven fabrics made of polyurethane elastic fiber filaments, a polyurethane elastic fiber nonwoven fabric produced by a so-called "melt-blow spinning method" has hitherto been used in the fields where comparatively good conformability to the movement of human body is required (for example, side band of paper diaper, base fabric of emergency adhesive plaster, disposable glove, etc.) or the fields where comparatively soft stretchability is required (outer wear fields, for example, sport clothes, stretchable cotton pad, etc. ) because of excellent stretchability, flexibility and permeability.

Japanese Unexamined Patent Publication No. 6-293117 discloses that a synthetic leather having excellent stretchability is obtained by using this kind of a polyurethane elastic fiber nonwoven fabric as a base material for synthetic leather, and also suggests to use such a synthetic leather as materials of shoes, bags, pouches, furnitures, interiors, car sheets, and clothes.

However, since such a polyurethane elastic fiber nonwoven fabric has excellent stretchability and flexibility, as described above, but generally has small tear strength, sufficient tear strength as one of important basic physical properties of the synthetic leather can not be attained when used as a base material of the synthetic leather. Depending on the purposes of the synthetic leather, products suited for practical use can not be obtained.

Thus, an object of the present invention is to provide a polyurethane elastic fiber nonwoven fabric having both excellent stretchability and high tear strength and its production, and a synthetic leather using the polyurethane elastic fiber nonwoven fabric.

To solve the problems described above, the present invention provides a polyurethane elastic fiber nonwoven fabric comprising polyurethane elastic fiber filaments which are mutually fused and bonded, wherein a tensile elongation is not less than 100%, a recovery at 50% elongation is not less than 75%, and a tear strength per basis weight is not less than 53.9 mN (5.5 gf), which is produced by dehydrating a thermoplastic polyurethane elastomer having a Shore A hardness of not less than 92, thereby to reduce a moisture content to 150 ppm or less, melt-spinning the thermoplastic polyurethane elastomer, scattering the resulting polyurethane filaments through a high-speed air flow, and depositing and laminating the filaments in a sheet form at a temperature which is 35 °C lower than the Vicat softening temperature.

As described above, the polyurethane elastic fiber nonwoven fabric of the present invention is basically produced by a melt-blow spinning method. A general procedure of the melt-blow spinning method will now be described simply below. That is, the melt-blow spinning method is characterized by feeding a molten thermoplastic polymer to nozzle holes arranged in a line, continuously extruding the molten polymer through the nozzle holes, blowing off a high-temperature gas from slits arranged at both sides of the group of nozzles at high speed, thinning and solidifying the polymer extruded through the nozzle holes by means of gas energy to form continuous filaments, depositing and laminating the group of the continuous filaments on a moving conveyor net, and mutually bonding the filaments due to self-bonding properties of the filaments themselves.

The first feature of the present invention is that the strength of the filaments obtained by melt spinning is enhanced by using a hard thermoplastic polyurethane having a Shore A hardness of not less than 92 as a thermoplastic polymer. The Shore A hardness means a standard of the hardness of a comparatively soft substance and is represented by a value within a range from 0 to 100. On the other hand, the hardness of a comparatively hard urethane is represented by a Shore D hardness. A thermoplastic polyurethane, which can be produced industrially at present, is a product having the hardness within a range from a Shore A hardness of about 70 to a Shore D hardness of about 75. Accordingly, the "thermoplastic polyurethane having a Shore A hardness of not less than 92" in the present invention means a thermoplastic polyurethane, the upper hardness limit of which is up to a Shore D hardness of about 75.

A general thermoplastic urethane is produced by reacting a comparatively high-molecular polyol component which forms a soft segment moiety, and a low-molecular diol and a diisocyanate compound which form a hard segment moiety. The thermoplastic polyurethane having a Shore A hardness of not less than 92 used in the present invention is a polyurethane containing the hard segment moiety in comparatively large amount and those wherein the nitrogen content, which is a standard of the hardness, in the polymer is nearly not less than 4% by weight correspond to the thermoplastic polyurethane.

Although the soft segment component of the polyurethane includes, for example, polyetherdiol, polyesterdiol and polycarbonatediol components, any component may be used in the present invention. Although the diisocyanate compound includes, for example, aromatic compounds, typically, 4,4'-diphenylmethane diisocyanate (MDI) and aliphatic diisocyanates, typically, hexamethylene diisocyanate, any compound can be used in the present invention.

If necessary, additives for polymer, for example, hindered phenol antioxidant and various amine antioxidants; benzotriazole ultraviolet absorber and hindered amine ultraviolet absorber; smoothing agents such as amide wax and montanoic acid wax; thermal decomposition inhibitors such as various carbodiimide compounds; various pigments such as titanium oxide and red iron oxide; and gas yellowing inhibitors may be added.

Although the method of polymerizing a polymer includes, for example, various methods such as continuous melt polymerization method, vat curing method, belt method and kneader method, any polymerization method may be used in the present invention.

Although the hardness of the thermoplastic polyurethane basically depends on the mixing ratio of the respective components described above, the hardness varies with the ratio of the hard segment moiety to the soft segment moiety, the length of the hard segment moiety, and the state of phase separation. The thermoplastic polyurethane used in the present invention is preferably a polyurethane wherein the hard segment moiety is long and is contained in a large amount and also the Vicat softening temperature is high. Specifically, as described above, a thermoplastic polyurethane having the Shore A hardness of not less than 92 and the Vicat softening temperature of not lower than 120°C is preferably used.

The second feature of the present invention is that the thermoplastic polyurethane is dehydrated, thereby to reduce the moisture content to 150 ppm or less, preferably 110 ppm or less, more preferably 70 ppm or less, and molten before melt-blow spinning. The reason is as follows.

The "hard thermoplastic polyurethane having the Shore A hardness of not less than 92" used in the present invention has such characteristics that the melting point is higher than that of the thermoplastic polyurethane used in a conventional melt-blow nonwoven fabric and the melt density is drastically high. For example, the melt viscosity measured at 190°C of the thermoplastic polyurethane having the Shore A hardness of 85 is within a range from about 5,000 to 50,000 poise, whereas, the melt viscosity of the thermoplastic polyurethane used in the present invention is within a range from 100,000 to 1,000,000.

By the way, since the molten polymer is drawn to a proper fiber diameter by a heating air in the melt-blow spinning process, the melt viscosity on extrusion through a nozzle must be drastically reduced regardless of the composition of the polyurethane. Accordingly, although the thermoplastic polyurethane having high viscosity used in the present invention must be spun at very high temperature in case of the melt-blow spinning, the thermoplastic polyurethane is thermally decomposed, vigorously, when it is molten at high temperature. It is well known that an urethane bond is thermally decomposed, vigorously, when the temperature exceeds 230°C. When the melt-blow spinning of the thermoplastic polyurethane is carried out under conditions of vigorous thermal decomposition, the molten polymer extruded through the nozzle foams, thus making it impossible to form a filament, in the worst case.

Under the conditions of comparatively less thermal decomposition, a nonwoven fabric can be obtained without causing yarn breakage, but the resulting nonwoven fabric has poor mechanical properties because of reduction of the tensile strength. The cause for deterioration of mechanical properties is deemed as follows. That is, the thermoplastic polyurethane chemically changes during melting, thereby to reduce the molecular weight or to cause insufficient crystallization and rearrangement of the hard segment moiety after formation of the filament.

Thus, according to the present invention, the above-described adverse influence exerted as a result of the use of the high-hardness polymer can be reduced to the minimum by reducing the moisture content of the thermoplastic polyurethane to 150 ppm or less, preferably 110 ppm or less, more preferably 70 ppm or less, before melt-blow spinning.

The third feature of the present invention is that filaments are deposited and laminated in a sheet form at a temperature which is 35°C lower than the Vicat softening temperature. The reason is as follows.

The polyurethane elastic fiber nonwoven fabric, which is obtained by melt-blow spinning of the thermoplastic polyurethane used in the present invention, presented such a phenomenon that mutual bonding of the filaments exerts an influence not only on the tensile strength, but also on the tear strength. Enhancement of a mutual bonding force between the filaments usually increases the tensile strength, while it decreases the tear strength, though any polyurethane elastic fiber nonwoven fabric does not always behave in the manner described above. Therefore, it becomes necessary to optimize the mutual bonding force between the filaments to obtain a nonwoven fabric having good balance between the tensile strength and the tear strength.

The most effective method of controlling the mutual bonding force between the filaments is to control the depositing point temperature of the filaments in case the molten polymer extruded through the nozzle is deposited and laminated on the conveyor net while thinning and cooling by a high-temperature gas flow. This depositing point temperature varies with the melting temperature, the temperature of the high-temperature gas, or the flow rate, and the condition capable of exerting a largest influence on the depositing temperature is a distance between the nozzle and the conveyor net. If other conditions are the same, the depositing point temperature of the filaments decreases when the distance between the nozzle and the conveyor net increases. Suction of the heating air under the conveyor net is also an important condition to control the depositing point temperature of the filaments. The larger the suction amount of the heating air under the conveyor net, the more the depositing point temperature of the filaments decreases. The suction amount is preferably set to an amount which is two times, more preferably three times, larger than the flow rate of the heating air.

The depositing point temperature can be set by using the Vicat softening temperature of the urethane polymer as the standard. In case the filaments are deposited in the state where the temperature is higher than the Vicat softening temperature, a film-like nonwoven fabric is obtained because of insufficient solidification of the filaments. In case the filaments are cooled to the temperature lower than the Vicat softening temperature, the mutual bonding force between the filaments is reduced virtually in proportion to a difference between the temperature and the Vicat softening temperature.

Accordingly, according to the present invention, high tear strength of not less than 53.9 mN (5.5 gf) is attained in place of reducing the tensile strength to some degree by depositing and laminating the filaments after cooling to the temperature so that a difference in temperature becomes higher than 35°C. It becomes possible to further enhance the tear strength by subjecting to various treatments such as lamination, softening, heat treatment, embossing and the like.

As described above, the nonwoven fabric having high tear strength of the present invention can be obtained by the method of subjecting a high-hardness polyurethane to melt-blow spinning in the state where a chemical change is reduced to the minimum, thereby to comparatively reduce the bonding force of filaments on deposition and to maintain large degree of freedom of the filaments, which constitute the nonwoven fabric. The reason why the tear strength is enhanced by maintaining large degree of freedom of the filaments is deemed as follows. That is, since a lot of filaments participate in the portion to be broken, one-point concentration of stress does not occur.

The fiber diameter of the filaments, which constitute the polyurethane elastic nonwoven fabric of the present invention, is preferably within a range from about 5 to 50 µm. The smaller, the fiber diameter, the more flexible the resulting nonwoven fabric becomes. When the fiber diameter is smaller than 5 µ m, the tear strength is reduced.

The polyurethane elastic nonwoven fabric of the present invention can realize a synthetic leather having both excellent stretchability and high tear strength, wherein a tensile elongation is not less than 100%, a recovery at 50% elongation is not less than 75%, and a tear strength per basis weight is not less than 24.5 mN (2.5 gf), preferably not less than 29.4 mN (3.0 gf), by laminating a skin layer made of an urethane elastomer onto the surface of the polyurethane elastic nonwoven fabric as a base material. The basis weight of the nonwoven fabric is usually within a range from about 25 to 500 g/m², but is preferably from about 50 to 400 g/m² when used as the base material of the synthetic leather.

A conventional synthetic leather has a structure wherein a skin layer made of a polyurethane is laminated onto a woven knitted fabric or nonwoven fabric made of non-stretchable fibers, and such a synthetic leather is mainly produced by two kinds of methods. The first method is a wet method of regenerating an urethane layer in water from an urethane solution coated on a fiber layer as a base material, while the second method is a dry method, typically a method of coating a skin layer produced in a separate step with an adhesive and laminating the coated skin layer onto a fiber layer as a base material. Among these two kinds of methods, the dry method is suited for the method of producing the synthetic leather of the present invention. The synthetic leather produced by the dry method generally has such a structure that a polyurethane surface layer having a thickness within a range from about 10 to 70 µm is firmly bonded onto a fiber base material having a thickness within a range from about 0.3 to 1.5 mm via an adhesive layer having a thickness within a range from about 20 to 150 µm.

The skin layer used in the synthetic leather of the present invention can be produced by the method of coating a crested release paper with an urethane resin solution for skin and drying the urethane resin solution in a dry oven or the method of drying and solidifying a slurry solution or dispersion of a polyurethane resin for skin to form a sponge-like skin.

To bond the polyurethane elastic fiber nonwoven fabric as the base material with the skin layer, adhesive solutions composed mainly of a polyurethane resin having reactivity, a crosslinking agent, and a reaction accelerator, which are generally used, can be used. Among these adhesive solutions, an adhesive solution using only a polar solvent capable of remarkably dissolving an urethane such as N,N-dimethylformamide (DMF), N,N-dimethylacetamide (DMAc) or the like is not preferred because it easily dissolves the urethane elastic fiber nonwoven fabric of the present invention.

In the present invention, an aqueous adhesive which does not dissolve an urethane, an adhesive solution using a solvent (e.g. methyl ethyl ketone (MEK), toluene, etc.) which does not dissolve an urethane but swells the urethane, or an adhesive solution using a mixed solvent of these solvents and DMF or DMAc is preferred. An urethane hot-melt adhesive capable of bonding without using any solvent is particularly preferred in the present invention. Although the hot-melt adhesive is roughly classified into a spray type adhesive which is coated to the adhesive portion in a molten state and is capable of bonding until the adhesive is solidified, and the other type adhesive which is molten and bonded with heating after interposing a solid adhesive in a state of a nonwoven fabric, any type may be employed.

With respect to the synthetic leather of the present invention, the skin layer may be bonded after physical properties of the nonwoven fabric were improved by subjecting the polyurethane elastic fiber nonwoven fabric before laminating the skin layer onto a treatment such as heat press, needle punching, rubbing or impregnation with an elastic polymer solution.

The synthetic leather of the present invention can be produced, for example, by the following manner. First, a crested release paper is coated with an urethane resin solution for skin in a coating weight of about 50 to 200 g/m² using a coater and the urethane resin solution is dried in a hot oven. Then, the skin layer is coated with an urethane adhesive solution in a coating weight of about 100 to 300 g/m² and, after sufficiently drying the solvent, a polyurethane elastic fiber nonwoven fabric fed by a pressure roller is laminated and nipped, thereby properly impregnating the polyurethane elastic fiber nonwoven fabric with the adhesive. The reactive adhesive is reacted by aging in the state, and then the release paper is removed and the resulting synthetic leather is taken up. In case the degree of the reaction of the adhesive is insufficient, the reaction is completed by aging at 60 to 100°C. It is preferred to select a material having good stretchability and excellent permeability as the skin layer and adhesive used in the present invention.

The synthetic leather of the present invention has a three-layer structure composed of an urethane stretchable nonwoven fabric, an adhesive layer and a skin layer, and physical properties of a fiber layer as the base material greatly contribute to physical properties such as tensile elongation, elongation recovery and tear strength of the synthetic leather having such a structure. As a similar structure synthetic leather having stretchability, for example, a synthetic leather obtained by laminating a skin layer onto a nylon tricot having stretchability or a stretchable woven fabric as the base material is known. These synthetic leathers have large tensile strength and high tear strength, as a feature of a nylon filament product, but have drawbacks that the tensile elongation is small and the elongation recovery is drastically lowered. On the other hand, the synthetic leather of the present invention has excellent stretchability and large tear strength of not less than 24.5 mN (2.5 gf) per basis weight.

The synthetic leather requires the tear strength of not less than 24.5 mN (2.5 gf) per basis weight and the reason lies in durability when applying the synthetic leather to uses, for example, shoes, sheets and furnitures. For example, when pinholes are formed, breakage easily enlarges from pinholes in case of a synthetic leather having small tear strength, while the synthetic leather having a tear strength of not less than 24.5 mN (2.5 gf), preferably not less than 29.4 mN (3.0 gf), per basis weight does not present such a phenomenon that breakage enlarges from pinholes.

The synthetic leather of the present invention has such a surprising performance wherein clear embossing, that could have never been performed in case of a conventional synthetic leather, can be carried out and a clear emboss thus formed does not disappear even if severe elongation recovery is repeated and, furthermore, the portion having a very small curvature can also be embossed and the embossed form is not impaired by a strong outer force. Such a surprising performance is deemed as a reflection of proper conformability capable of conforming to any form of the polyurethane elastic fiber nonwoven fabric of the present invention and excellent thermosetting properties of the hard segment moiety of a comparatively hard polyurethane.

### BEST MODE FOR CARRYING OUT THE INVENTION

The following Examples further illustrate the present invention in detail, but the present invention is not limited by these Examples.

### (Example 1)

A thermoplastic polyurethane having a Shore A hardness of 95 and a Vicat softening temperature of 120°C was obtained by mixing polybutylene adipate (PBA) having a hydroxyl group at both terminals (molecular weight: 2,000), 4,4'-diphenylmethane diisocyanate (MDI) and 1,4-butanediol (BD) in a weight ratio (PBA/MDI/BD) of 80/59/17.5 and melt-polymerizing the molten mixture by a one shot system using a twin-screw polymerizer. Then, the resulting thermoplastic polyurethane was dehydrated and dried in a nitrogen atmosphere at a drying temperature of 100°C for six hours using a hopper dryer manufactured by MATSUI MFG Co., Ltd. The moisture content of the thermoplastic content was measured by the Karl Fischer method and, as a result, it was 100 ppm. The nitrogen content in the polymer was 4.22% by weight.

Then, a polyurethane elastic fiber nonwoven fabric having a basis weight of 90 g/m² was obtained by melting the thermoplastic polyurethane, feeding the molten thermoplastic polyurethane to a melt-blow equipment provided with nozzles having a pore diameter of 0.5 mmφ arranged at intervals of 2 mm, extruding the molten thermoplastic polyurethane under the condition of 0.36 g/minute per nozzle hole, thinning and solidifying through a heating air blown off from both sides of the nozzles (236°C, 9.2 Nl/cm/minute) to form filaments having a fiber diameter of about 20 µm, scattering the filaments over a moving conveyor net located at the position which is 20 cm away from the nozzles, and sucking at a suction amount (suction speed: 6 m/s) which is three times larger than that of the heating air by a suction apparatus arranged immediately under the conveyor net. The spinning temperature was 234°C and the depositing point temperature of the filaments on the conveyor net was 80°C and, furthermore, a difference between the Vicat softening temperature of the polymer and the depositing point temperature was 40°C. The depositing point temperature of the filaments was measured by an infrared thermography "Neo Thermo TVS-610" manufactured by Nippon Avionics Co., Ltd.

### (Example 2)

In the same manner as in Example 1, except that a thermoplastic polyurethane having a weight ratio (PBA/MDI/BD) of 66/82/26.5, a Shore A hardness of 97 (Shore D hardness of 64) and a Vicat softening temperature of 125°C was used, a polyurethane elastic fiber nonwoven fabric having a basis weight of 90 g/m² was obtained. The spinning temperature was 245 °C , the temperature of the heating air was 247°C, the heating air flow was 9.2 Nl/cm/minute, the depositing point temperature on the conveyor net was 81°C, and a difference between the Vicat softening temperature of the polymer and the depositing point temperature was 44 °C. The nitrogen content in the polymer of the thermoplastic polyurethane used was 5.26% by weight.

### (Example 3)

The thermoplastic polyurethane used in Example 1 was dehydrated and dried in a nitrogen atmosphere at a drying temperature of 100°C for eight hours using the same hopper dryer as in Example 1, thereby to reduce the moisture content to 70 ppm, and then a polyurethane elastic fiber nonwoven fabric having a basis weight of 180 g/m² was produced under the same conditions as in Example 1. The depositing point temperature on the conveyor net was 80 °C, and a difference between the Vicat softening temperature of the polymer and the depositing point temperature was 40°C.

### (Example 4)

The thermoplastic polyurethane used in Example 1 was dehydrated and dried in a nitrogen atmosphere at a drying temperature of 100°C for four hours using the same hopper dryer as in Example 1, thereby to reduce the moisture content to 150 ppm, and then a polyurethane elastic fiber nonwoven fabric having a basis weight of 180 g/m² was produced under the same conditions as in Example 1. The depositing point temperature on the conveyor net was 80 °C, and a difference between the Vicat softening temperature of the polymer and the depositing point temperature was 40°C.

### (Example 5)

Under the same manufacturing conditions as in Example 3, except that the distance between the nozzle and the moving conveyor net was changed to 25 cm, a polyurethane elastic fiber nonwoven fabric having a basis weight of 150 g/m² was produced. The depositing point temperature on the conveyor net was 85°C, and a difference between the Vicat softening temperature of the polymer and the depositing point temperature was 35°C.

### (Example 6)

Under the same manufacturing conditions as in Example 3, except that the distance between the nozzle and the moving conveyor net was changed to 30 cm, a polyurethane elastic fiber nonwoven fabric having a basis weight of 150 g/m² was produced. The depositing point temperature on the conveyor net was 80°C, and a difference between the Vicat softening temperature of the polymer and the depositing point temperature was 40°C.

### (Example 7)

Under the same manufacturing conditions as in Example 3, except that the distance between the nozzle and the moving conveyor net was changed to 35 cm, a polyurethane elastic fiber nonwoven fabric having a basis weight of 150 g/m² was produced. The depositing point temperature on the conveyor net was 78°C, and a difference between the Vicat softening temperature of the polymer and the depositing point temperature was 42°C.

### (Example 8)

A thermoplastic polyurethane having a Shore A hardness of 98 (Shore D hardness of 70) and a Vicat softening temperature of 137°C was obtained by mixing polyhexamethylene carbonate diol (PC) having a molecular weight of 2,000, 4,4'-diphenylmethane diisocyanate (MDI) and 1,4-butanediol (BD) in a weight ratio (PC/MDI/BD) of 66/92/30 and polymerizing the molten mixture by a one shot system using a twin-screw polymerizer. Then, the resulting thermoplastic polyurethane was dehydrated and dried in a nitrogen atmosphere at a drying temperature of 100°C for ten hours using a hopper dryer manufactured by MATSUI MFG Co., Ltd. The moisture content of the thermoplastic content was measured by the Karl Fischer method and, as a result, it was 50 ppm. The nitrogen content in the polymer was 5.48% by weight.

Then, a polyurethane elastic fiber nonwoven fabric having a basis weight of 250 g/m² was obtained by melting the thermoplastic polyurethane, feeding the molten thermoplastic polyurethane to a melt-blow equipment provided with nozzles having a pore diameter of 0.5 mmφ arranged at intervals of 2 mm, extruding the molten thermoplastic polyurethane under the condition of 0.45 g/minute per nozzle hole, thinning and solidifying through a heating air blown off from both sides of the nozzle (248°C, 9.2 Nl/cm/minute) to form filaments having a fiber diameter of about 20 µm, scattering the filaments over a moving conveyor net located at the position which is 20 cm away from the nozzle. The spinning temperature was 247°C and the depositing point temperature of the filaments on the conveyor net was 82 °C and, furthermore, a difference between the Vicat softening temperature of the polymer and the depositing point temperature was 55°C.

### (Comparative Example 1)

Under the same conditions as in Example 1 described in Japanese Unexamined Patent Publication 59-223347, a thermoplastic polyurethane having a Shore A hardness of 82 and a Vicat softening temperature of 90°C was obtained by mixing polytetramethylene glycol (PTMG) having a hydroxyl value of 102, MDI and 1,4-bis(β-hydroxyethoxy)benzene (BHEB) in a weight ratio (PTMG/MDI/BHEB) of 5548/1953/499 and polymerizing the molten mixture by a kneader method. Then, the resulting thermoplastic polyurethane was dehydrated and dried until the moisture content is reduced to 100 ppm in the same manner as in Example 1, and then a polyurethane elastic fiber nonwoven fabric having a basis weight of 90 g/m² was obtained by the same method as in Example 1. The spinning temperature was 215°C, the temperature of the heating air was 217°C, the heating air flow was 9.2 Nl/cm/minute, the depositing point temperature of the filaments on the conveyor net was 75 °C and, furthermore, a difference between the Vicat softening temperature of the polymer and the depositing point temperature was 15°C. The nitrogen content in the polymer was 2.73% by weight.

### (Comparative Example 2)

Under the same conditions as in Example 1 described in Japanese Unexamined Patent Publication 6-293117, a thermoplastic polyurethane having a Shore A hardness of 88 and a Vicat softening temperature of 105°C was obtained by mixing PBA having a hydroxyl value of 56, MDI and BD in a weight ratio (PBA/MDI/BD) of 1160/660/179 and polymerizing the molten mixture by a kneader method. Then, the resulting thermoplastic polyurethane was dehydrated and dried until the moisture content is reduced to 100 ppm in the same manner as in Example 1, and then a polyurethane elastic fiber nonwoven fabric having a basis weight of 90 g/m² was obtained by the same method as in Example 1. The spinning temperature was 225°C, the temperature of the heating air was 227°C, the heating air flow was 9.2 Nl/cm/minute, the depositing point temperature of the filaments on the conveyor net was 78°C and, furthermore, a difference between the Vicat softening temperature of the polymer and the depositing point temperature was 27°C. The nitrogen content in the polymer was 3.69% by weight.

### (Comparative Example 3)

The thermoplastic polyurethane used in Example 1 was dehydrated and dried in a nitrogen atmosphere at a drying temperature of 100 °C for 2.5 hours using a hopper dryer manufactured by MATSUI MFG Co., Ltd. to obtain a dry polymer, a moisture content of which measured by the Karl Fischer method is 220 ppm. Using the dry polymer, a polyurethane elastic fiber nonwoven fabric having a basis weight of 180 g/m² was produced under the same manufacturing conditions as in Example 1, except that the spinning temperature and the heating air temperature were lowered by 5°C. The depositing point temperature of the filaments on the conveyor net was 80°C and, furthermore, a difference between the Vicat softening temperature of the polymer and the depositing point temperature was 40°C.

### (Comparative Example 4)

The thermoplastic polyurethane used in Example 1 was dehydrated and dried in a nitrogen atmosphere at a drying temperature of 100 °C for two hours using a hopper dryer manufactured by MATSUI MFG Co., Ltd. to obtain a dry polymer, a moisture content of which measured by the Karl Fischer method is 350 ppm. Using the dry polymer, a trial of melt-blow spinning was made in the same manner as in Example 1. However, yarn breakage occurred because of severe foaming of the molten polymer extruded through the nozzle, and thus a nonwoven fabric could not be produced.

### (Comparative Example 5)

Under the same manufacturing conditions as in Example 3, except that the distance between the nozzle and the moving conveyor net was changed to 10 cm, a polyurethane elastic fiber nonwoven fabric having a basis weight of 150 g/m² was produced. The depositing point temperature on the conveyor net was 105°C, and a difference between the Vicat softening temperature of the polymer and the depositing point temperature was 15°C.

### (Comparative Example 6)

Under the same manufacturing conditions as in Example 3, except that the distance between the nozzle and the moving conveyor net was changed to 15 cm, a polyurethane elastic fiber nonwoven fabric having a basis weight of 150 g/m² was produced. The depositing point temperature on the conveyor net was 94°C, and a difference between the Vicat softening temperature of the polymer and the depositing point temperature was 26°C.

With respect to the respective Examples and Comparative Examples described above, the tensile strength, the tensile elongation, the tear strength, and the recovery at 50% elongation were measured. The results are shown in Table 1 and Table 2. The Vicat softening temperature of the thermoplastic polyurethane, the Shore A hardness (Shore D hardness) of the thermoplastic polyurethane, the basis weight of the nonwoven fabric, the tensile strength and the tensile elongation of the nonwoven fabric, the recovery at 50% elongation of the nonwoven fabric, the tear strength of the nonwoven fabric, and the stiffness of the nonwoven fabric were measured by the methods described in JIS K 7206, JIS K 6301, JIS L 1096 6.4., JIS L 1096 6.12.1 B (width of sample: 2 cm, distance between chucks: 5 cm, testing speed: 20 cm/minute), JIS L 1096 6.13.1 A (width of sample: 2 cm, distance between chucks: 5 cm, testing speed: 20 cm/minute, after first 50% elongation, the nonwoven fabric is recovered immediately without standing and then subjected to second 50% elongation without standing), JIS L 1085 5.5 A-1 (single tongue method), and JIS L 1096 6.19.1 A (45° cantilever method), respectively.

In the following Tables 1 to 4, the unit "gf" can be converted into the SI unit "mN", wherein 1gf≙9.806 mN.

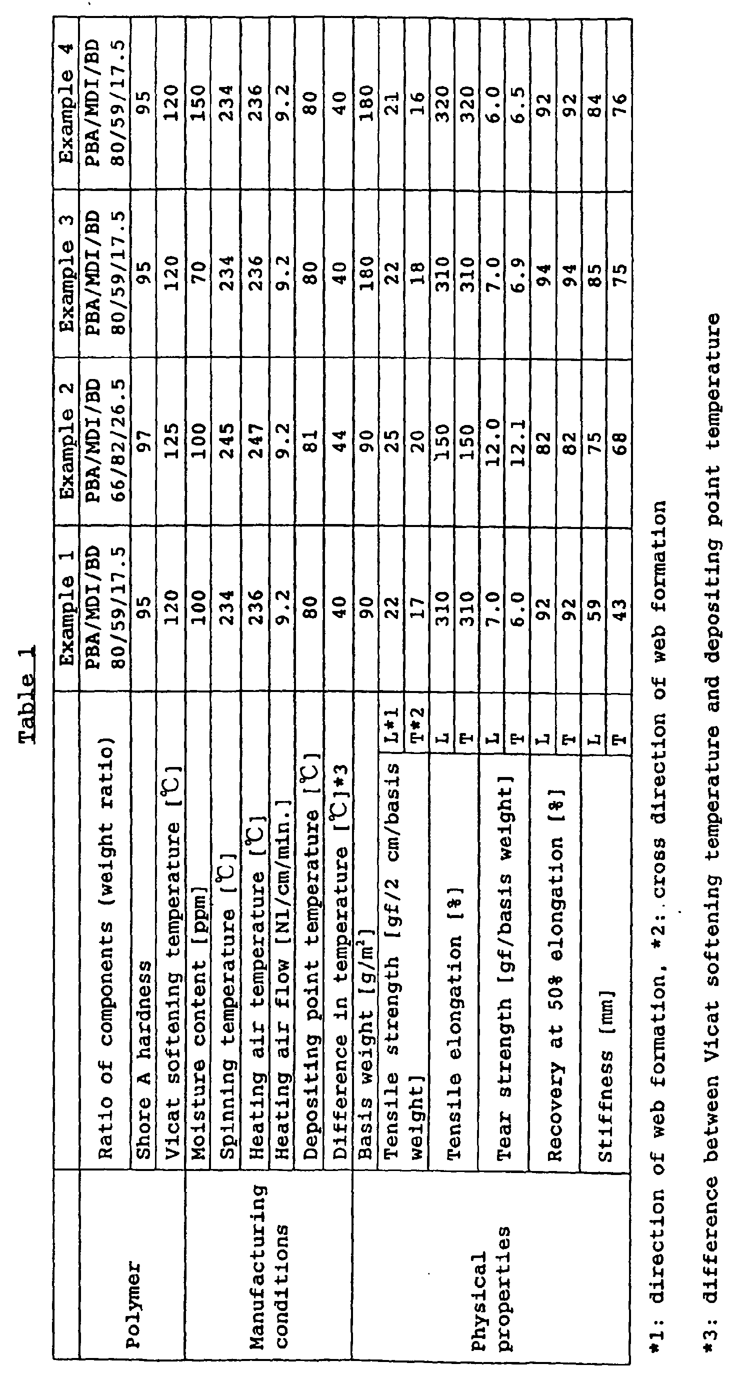

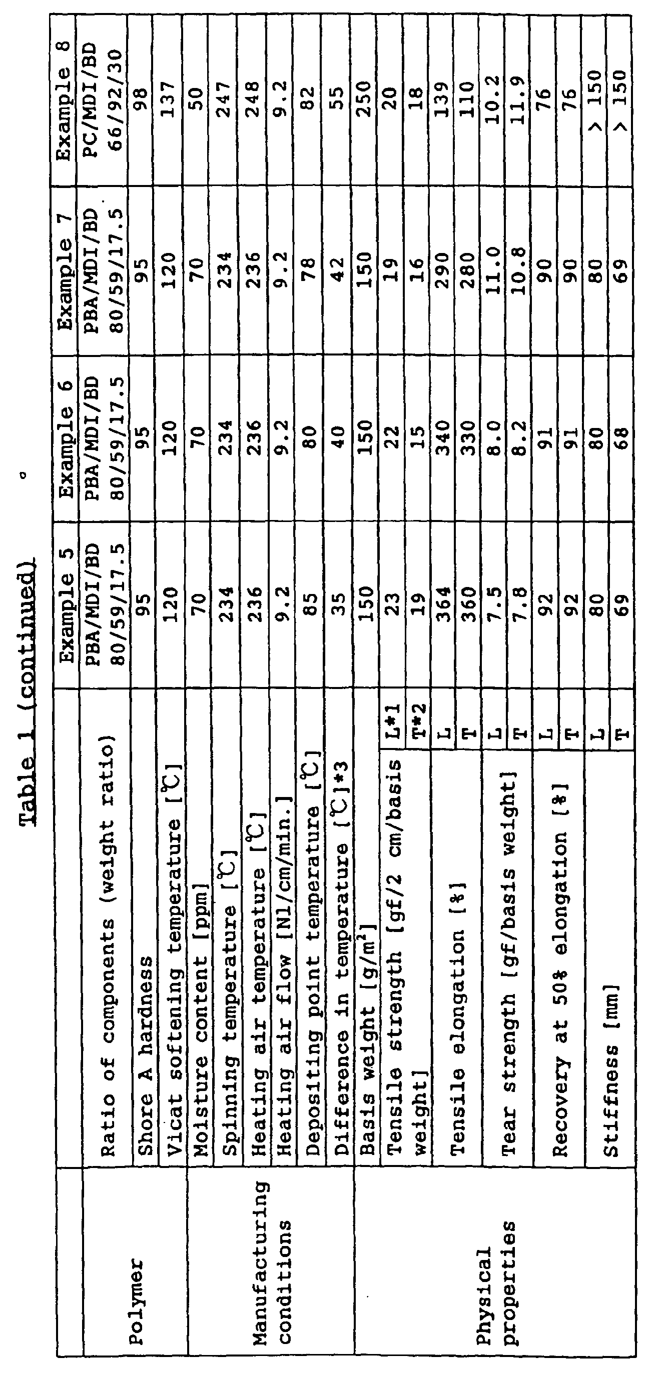

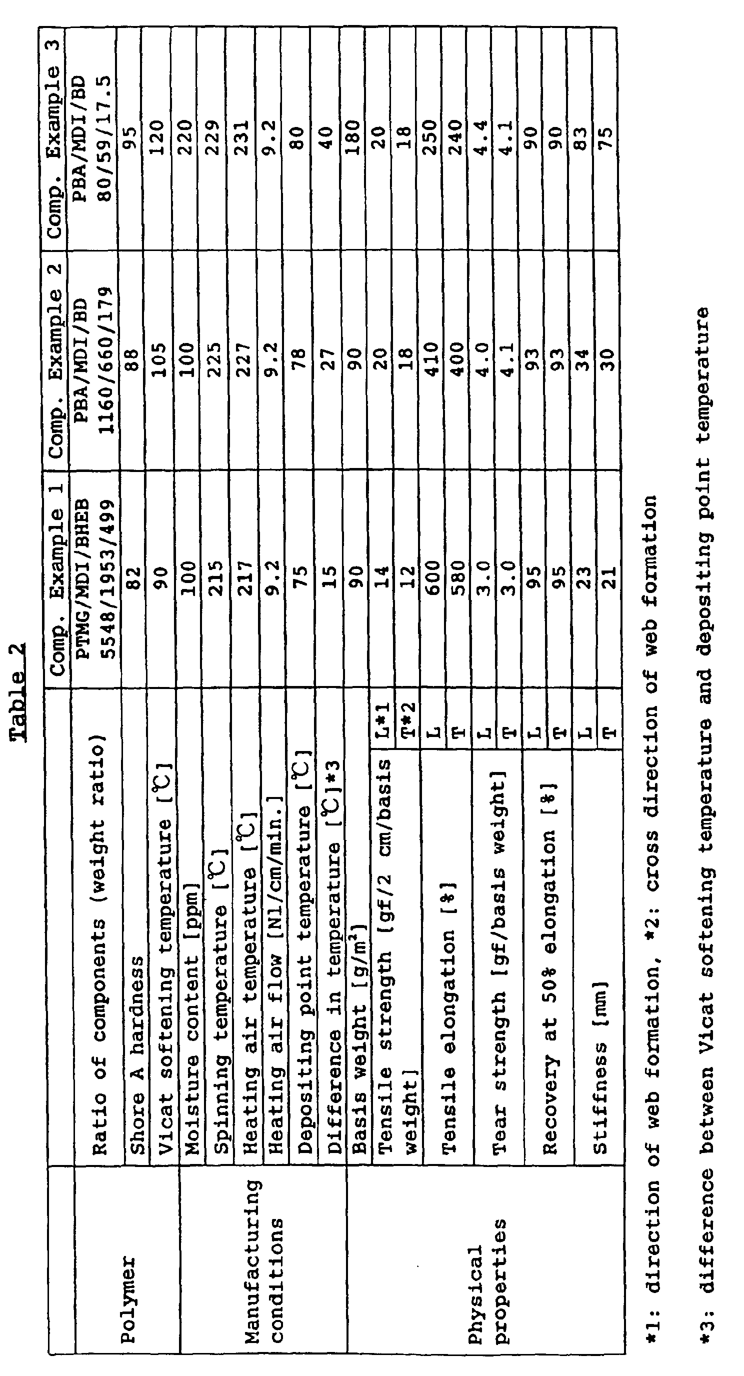

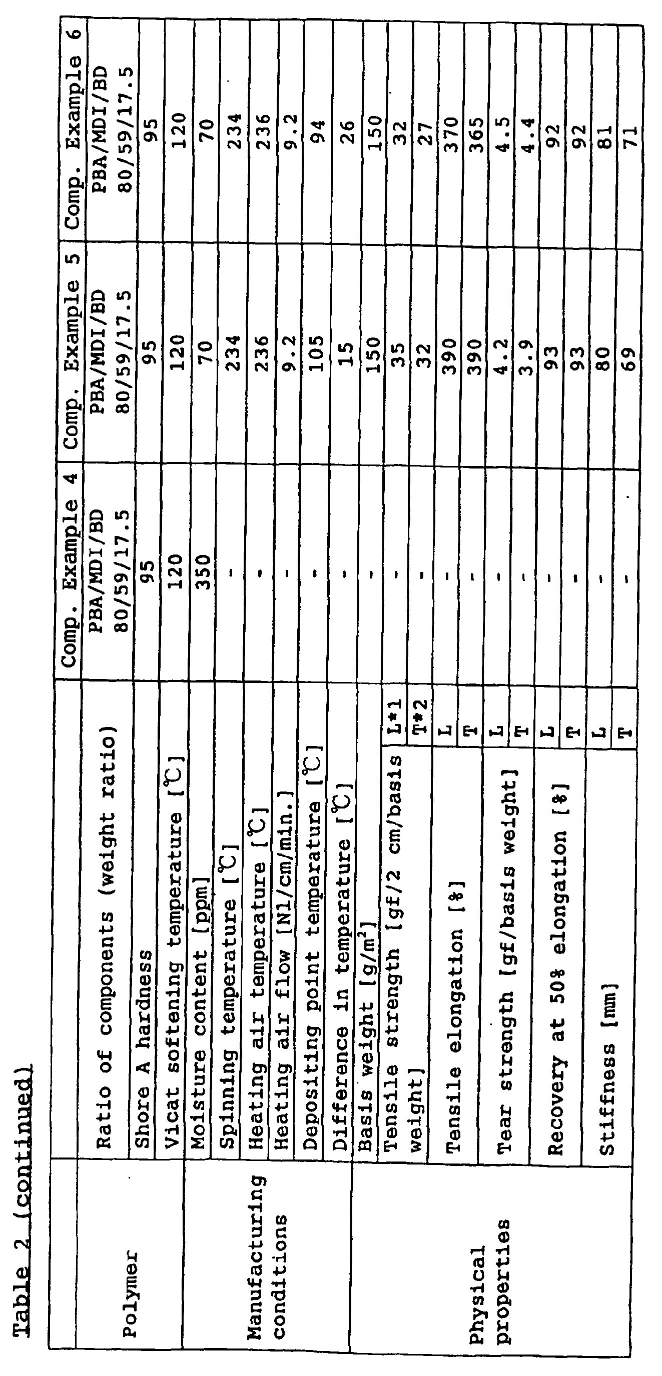

As is apparent from Table 1, the polyurethane elastic fiber nonwoven fabrics of Examples 1 to 8, which were produced by using a thermoplastic polyurethane having a Shore A hardness of not less than 92 and a moisture content of not more than 150 ppm under such conditions that a difference between the Vicat softening temperature of the thermoplastic polyurethane and the depositing point temperature on the conveyor net becomes 35°C or higher, have a tensile elongation of not less than 100%, a tear strength per basis weight of not less than 53.9 mN (5.5 gf) and a recovery at 50% elongation of not less than 75%, and also have excellent stretchability and high tear strength.

As is apparent from Table 2, the polyurethane elastic fiber nonwoven fabrics of Comparative Examples 1 and 2, which were produced by using a thermoplastic polyurethane which has a moisture content of not more than 150 ppm but has a Shore A hardness of not more than 92 under such conditions that a difference between the Vicat softening temperature of the thermoplastic polyurethane and the depositing point temperature on the conveyor net becomes 35°C or lower, have excellent stretchability such as tensile elongation of not less than 400% and recovery at 50% elongation of not less than 90%, but could attain a tear strength of only about 29.4 to 39.2 mN (3 to 4 gf) per basis weight.

Also as is apparent from Table 2, the polyurethane elastic fiber nonwoven fabric of Comparative Example 3 using a thermoplastic polyurethane which has a Shore A hardness of not less than 92 but has a moisture content of not less than 150 ppm could not attain high tear strength of not less than 53.9 mN (5.5 gf) per basis weight even if it is produced under such conditions that a difference between the Vicat softening temperature of the thermoplastic polyurethane and the depositing point temperature on the conveyor net becomes 35°C or higher. In Comparative Example 4 using a thermoplastic polyurethane having particularly high moisture content of 350 ppm, it becomes impossible to conduct melt-blow spinning.

As shown in Table 2, the polyurethane elastic fiber nonwoven fabrics of Comparative Examples 5 and 6, which were produced under such conditions that a difference between the Vicat softening temperature of the thermoplastic polyurethane and the depositing point temperature on the conveyor net becomes 35°C or lower even in case of using a thermoplastic polyurethane having a shore A hardness of not less than 92 and a moisture content of not more than 150, could not attain high tear strength of not less than 53.9 mN (5.5 gf) per basis weight.

As is apparent from the above descriptions, it is a matter of importance to use a thermoplastic polyurethane having a shore A hardness of not less than 92 and a moisture content of not more than 150 and to set the depositing point temperature of the filament during melt-blow spinning to the temperature which is 35°C lower than the Vicat softening temperature of the thermoplastic polyurethane in order to obtain a polyurethane elastic fiber nonwoven fabric which has excellent stretchability such as tensile elongation of not less than 100% and recovery at 50% elongation of not less than 75%, and also has high tear strength of not less than 53.9 mN (5.5 gf) per basis weight.

Examples of the synthetic leather using the polyurethane elastic fiber nonwoven fabric of the present invention will now be described below.

### (Example 9)

A synthetic leather was obtained by coating a skin layer for synthetic leather made of a dry urethane sheet having a thickness of 30 µm, which was laminated onto a release paper, with an urethane adhesive comprising 100 parts by weight of C-4010 (manufactured by DAINIPPON INK & CHEMICALS Co., Ltd.), 8 parts by weight of Coronate L (manufactured by NIPPON POLYURETHANE INDUSTRY CO., LTD), 5 parts by weight of Accel S (manufactured by DAINIPPON INK & CHEMICALS Co., Ltd.) and 40 parts by weight (20/20 parts by weight) of a solvent (methyl ethyl ketone/toluene) in a coating weight of 85 g/m², continuously drying the urethane adhesive at 80 °C to remove the solvent, laminating the polyurethane elastic fiber nonwoven fabric cloth of Example 1 as a base material layer, nipping by a pressure roller, thereby appropriately impregnating the nonwoven fabric with the adhesive, subjecting the nonwoven roller impregnated with the adhesive to a heat treatment at 60°C for 24 hours, and peeling off the release paper. Incidentally, physical properties of the skin layer for synthetic leather used are shown in Table 3.

**Table 3**

| | | |
|---|---|---|
| Thickness [mm] | | 0.03 |
| Basis weight [g/m²] | | 22 |
| Tensile strength [gf/2 cm] | L*1 | 1000 |
| | T*2 | 540 |
| Tensile elongation [%] | L | 230 |
| | T | 140 |
| Tear strength [gf/basis weight] | L | 3.2 |
| | T | 2.7 |
| Recovery at 50% elongation [%] | L | 91 |
| | T | 91 |

| | | |
|---|---|---|
| *1: direction of web formation, *2: cross direction of web formation | | |

### (Example 10)

In the same manner as in Example 9, except that the polyurethane elastic fiber nonwoven fabric of Example 2 was used as the base material layer, a synthetic leather was produced.

### (Example 11)

A synthetic leather was obtained by coating the skin layer for synthetic leather used in Example 9 with a reactive urethane adhesive comprising 100 parts by weight of UD-760 (manufactured by Dainichiseika Color & Chemicals Mfg. Co., Ltd.), 15 parts by weight of a crosslinking agent UD (manufactured by Dainichiseika Color & Chemicals Mfg. Co. , Ltd.), 10 parts by weight of a reaction accelerator UD-102 (manufactured by Dainichiseika Color & Chemicals Mfg. Co. , Ltd.) and 50 parts by weight (25/25 parts by weight) of a solvent (N,N-dimethylformamide/methyl ethyl ketone) in a coating weight of 125 g/m², continuously drying the urethane adhesive in the state where an inlet portion, a center portion and an outlet portion of a continuous dryer are respectively set to 60°C, 80°C and 100°C to remove the solvent, laminating the polyurethane elastic fiber nonwoven fabric cloth of Example 8 as a base material layer in the state of being heated to 100°C, taking up the resulting laminate in the form of a roll, reacting the reactive urethane adhesive while maintaining the roll at 60°C for 24 hours, and peeling off the release paper.

### (Comparative Example 7)

In the same manner as in Example 9, except that the polyurethane elastic fiber nonwoven fabric of Comparative Example 1 was used as the base material layer, a synthetic leather was produced.

### (Comparative Example 8)

In the same manner as in Example 9, except that the polyurethane elastic fiber nonwoven fabric of Comparative Example 2 was used as the base material layer, a synthetic leather was produced.

### (Comparative Example 9)

In the same manner as in Example 9, except that a half tricot obtained by knitting 6-nylon yarns (40 deniers and 10 filaments) was used as the base material layer, a synthetic leather was produced.

### (Comparative Example 10)

A nylon nonwoven fabric having high stretchability was obtained by subjecting webs made of nylon short fibers having 2 deniers to a needle punch treatment and a heat shrinkage treatment, and impregnating with a 18% urethane solution, followed by drying. The resulting nylon nonwoven fabric was sliced to the thickness of 0.8 mm. In the same manner as in Example 11, except that the sliced nonwoven fabric was used as the base material layer, a synthetic leather was produced.

With respect to the synthetic leathers of the respective Examples and Comparative Examples described above, the basis weight, the tensile strength, the tensile elongation, the tear strength, and the recovery at 50% elongation were measured. The results are shown in Table 4. The thickness and basis weight of the synthetic leather, the basis weight of the synthetic leather, the tensile strength and the tensile elongation of the synthetic leather, the recovery at 50% elongation of the synthetic leather, and the tear strength of the synthetic leather were measured by the methods described in JIS K 6505, JIS K 6550, the same standard as in case of the nonwoven fabric, and JIS K 6550, respectively.

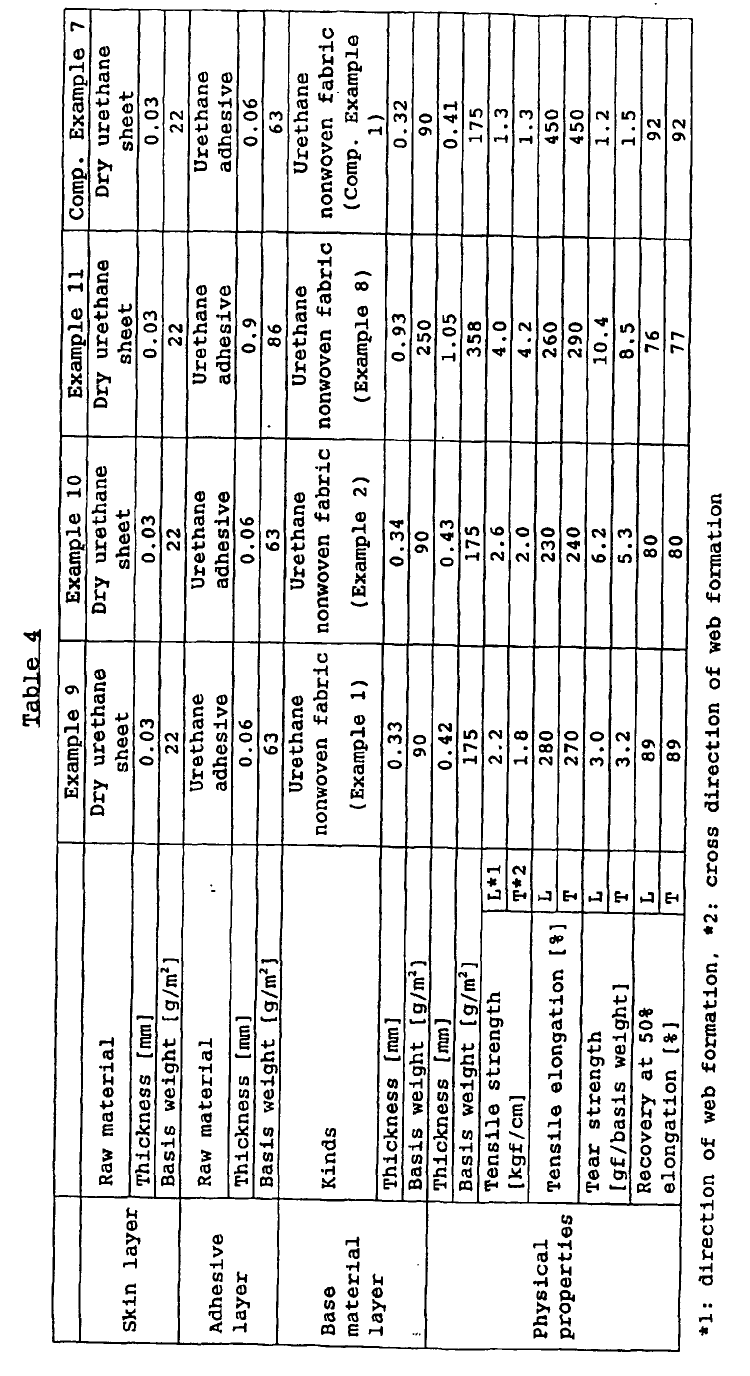

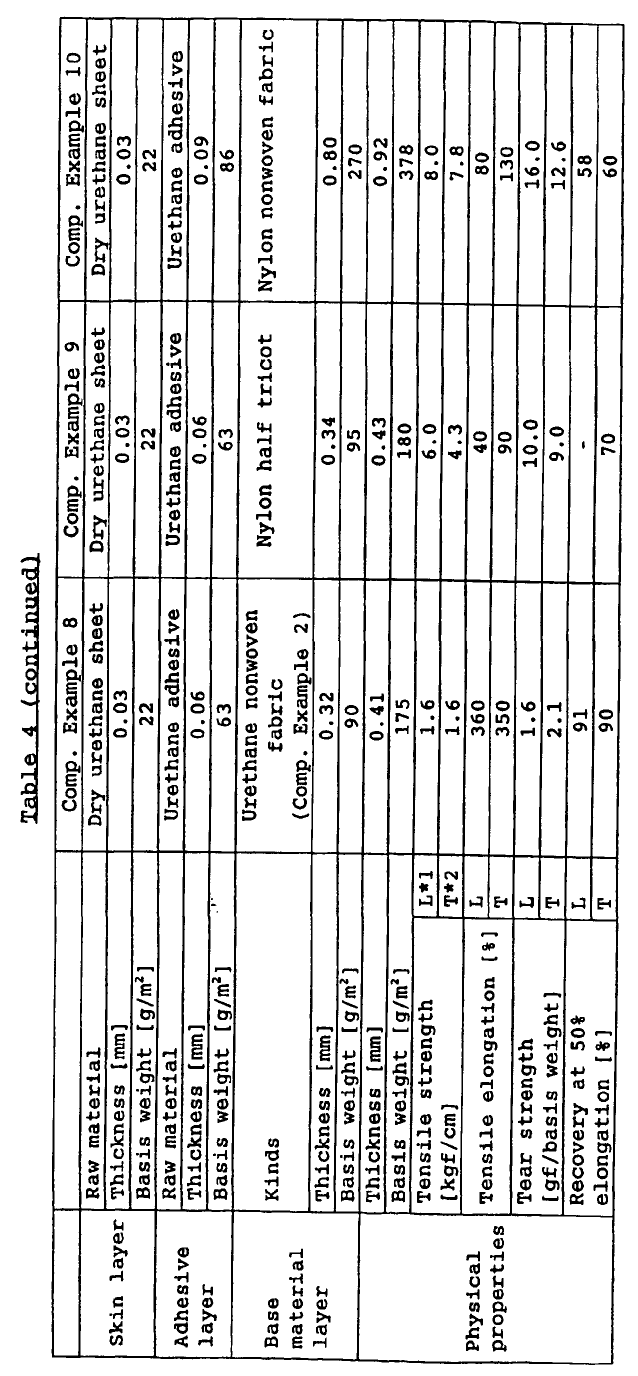

As is apparent from Table 4, the synthetic leathers of Examples 9, 10 and 11 using the polyurethane elastic fiber nonwoven fabrics (Examples 1, 2 and 8) of the present invention have excellent stretchability such as tensile elongation of not less than 100% and recovery at 50% elongation of not less than 75%, and also have high tear strength of not less than 24.5 mN (2.5 gf) per basis weight. However, the synthetic leathers of Comparative Examples 7 and 8 using the polyurethane elastic fiber nonwoven fabrics of Comparative Examples 1 and 2 have excellent stretchability, but could not attain sufficient tensile strength and tear strength.

The synthetic leather of Comparative Example 9 using a half tricot as the base material layer could attain high tensile strength and tear strength, as a feature of a nylon filament, but was a synthetic leather having poor stretchability such as low tensile elongation and drastically low elongation recovery. Furthermore, Comparative Example 10 using a nylon nonwoven fabric as the base material layer has a tensile elongation in a cross direction of web formation of 130% and could attain high tear strength, but was a synthetic leather having poor recovery at 50% elongation.

Although a dry urethane sheet is used as the skin layer in the Examples described above, a foamed urethane sheet, a vinyl chloride sheet and a nylon elastomer sheet can also be used. Since the skin layer and the base material layer are preferably made of the same material in view of recycling, a skin layer made of the urethane sheet is preferably used when using the polyurethane elastic fiber nonwoven fabric of the present invention as the base material layer.

The synthetic leather of the present invention is fit for uses, for example, sports shoes used in tennis, golf, and track and field events by utilizing excellent stretchability and flexibility described above, and can also be fit for uses, for example, furnitures and sheet materials by making use of embossability and integral moldability. It can be said that the synthetic leather is also fit for uses, for example, clothes such as outerwear by making use of excellent draping quality, in addition to the flexibility and stretchability.

## Claims

1. A polyurethane elastic fiber nonwoven fabric comprising polyurethane elastic fiber filaments which are mutually fused and bonded, wherein a tensile elongation (measured according to JIS L 1096 6.12.1 B) is not less than 100%, a recovery at 50% elongation (measured according to JIS L 1096 6.13.1 A) is not less than 75%, and a tear strength per basis weight (measured according to JIS L 1085 5.5 A-1 (single tongue method)) is not less than 53.9 mN (5.5 gf).

2. A method of producing a polyurethane elastic fiber nonwoven fabric, which comprises dehydrating a thermoplastic polyurethane elastomer having a Shore A hardness (measured according to JIS K 6301) of not less than 92, thereby to reduce a moisture content to 150 ppm or less, melt-spinning the thermoplastic polyurethane elastomer, scattering the resulting polyurethane filaments through a high-speed air flow, and depositing and laminating the filaments in a sheet form at a temperature which is 35°C lower than the Vicat softening temperature (measured according to JIS K 7206).

3. A synthetic leather comprising a base material layer made of a polyurethane elastic fiber nonwoven fabric according to claim 1 comprising polyurethane elastic fiber filaments which are mutually fused and bonded, and a skin layer made of a synthetic resin sheet laminated on the base material layer, wherein a tensile elongation (measured according to JIS K 6550) is not less than 100%, a recovery at 50% elongation (measured according to JIS L 1096 6.13.1A) is not less than 75%, and a tear strength per basis weight (measured according to JIS K6550), is not less than 24.5 mN, (2.5 gf).

## Patentansprüche

1. Faservlies aus elastischen Polyurethanfasern, umfassend Filamente aus elastischen Polyurethanfasern, die gegenseitig verschmolzen und gebunden sind, wobei eine Verlängerung bei Zugbeanspruchung (gemessen nach JIS L 1096 6.12.1 B) nicht weniger als 100% beträgt, eine Rückverformung bei 50% Dehnung (gemessen nach JIS L 1096 6.13.1 A) nicht weniger als 75% beträgt und eine Reißfestigkeit, bezogen auf das Basisgewicht, (gemessen nach JIS L 1085 5.5 A-1 (Einzelzungenverfahren)) nicht weniger als 53,9 mN (5,5 gf) beträgt.

2. Verfahren zur Herstellung eines Faservlieses aus elastischen Polyurethanfasern, umfassend das Dehydratisieren eines thermoplastischen Polyurethanelastomers mit einer Shore-A-Härte (gemessen nach JIS K 6301) von nicht weniger als 92, wodurch der Feuchtigkeitsgehalt auf 150 ppm oder weniger verringert wird, das Schmelzverspinnen des thermoplastischen Polyurethanelastomers, das Verstreuen der resultierenden Polyurethanfilamente durch einen Hochgeschwindigkeitsluftstrom und das Abscheiden und Laminieren der Filamente in eine Blattform bei einer Temperatur, die 35°C niedriger als die Vicat-Erweichungstemperatur (gemessen nach JIS K 7206) ist.

3. Synthetisches Leder, umfassend eine Basismaterialschicht, die aus einem Faservlies aus elastischen Polyurethanfasern nach Anspruch 1 hergestellt ist, umfassend Filamente aus elastischen Polyurethanfasern, die gegenseitig verschmolzen und gebunden sind, und eine Hautschicht, die aus einer synthetischen Harzschicht hergestellt ist, die auf die Basismaterialschicht laminiert ist, wobei eine Verlängerung bei Zugbeanspruchung (gemessen nach JIS K 6550) nicht weniger als 100% beträgt, eine Rückverformung bei 50% Dehnung (gemessen nach JIS L 1096 6.13.1 A) nicht weniger als 75% beträgt und eine Reißfestigkeit, bezogen auf das Basisgewicht, (gemessen nach JIS K 6550) nicht weniger als 24,5 mN (2,5 gf) beträgt.

## Revendications

1. Etoffe non tissée en fibres élastiques de polyuréthane comprenant des filaments en fibres élastiques de polyuréthane qui sont mutuellement fusionnés et liés, dans laquelle un allongement en traction (mesuré selon la norme JIS L 10 966.12.1 B) est non inférieur à 100 %, une recouvrance à 50 % d'allongement (mesurée selon la norme JIS L 10 966.13.1 A) est non inférieure à 75 %, et une résistance à la déchirure par poids de base (mesurée selon la norme JIS L 10 855.5 A-1 (méthode à une seule languette)) est non inférieure à 53,9 mN (5,5 gf).

2. Procédé de production d'une étoffe non tissée en fibres élastiques de polyuréthane, qui comprend la déshydratation d'un élastomère polyuréthane thermoplastique ayant une dureté Shore A (mesurée selon la norme JIS K 6 301) non inférieure à 92, pour réduire ainsi une teneur en humidité à 150 ppm ou moins, le filage par fusion de l'élastomère polyuréthane thermoplastique, la dispersion des filaments de polyuréthane résultants par un écoulement d'air à haute vitesse, et le dépôt et la stratification des filaments en une forme de feuille à une température qui est de 35 °C inférieure à la température de ramollissement Vicat (mesurée selon la norme JIS K 7 206).

3. Cuir synthétique comprenant une couche en matériau de base constituée d'une étoffe non tissée en fibres élastiques de polyuréthane selon la revendication 1, comprenant des filaments en fibres élastiques de polyuréthane qui sont mutuellement fusionnés et liés, et une couche de peau constituée d'une feuille en résine synthétique stratifiée sur la couche de matériau de base, dans lequel un allongement en traction (mesuré selon la norme JIS K 6 550) est non inférieur à 100 %, une recouvrance à 50 % d'allongement (mesurée selon la norme JIS L 10 966.13.1 A) est non inférieure à 75 %, et une résistance à la déchirure par poids de base (mesurée selon la norme JIS K 6 550) est non inférieure à 24,5 mN (2,5 gf).
